Europäisches Patentamt

European Patent Office

Office européen des brevets

(19)

(11) **EP 0 895 621 B1**

(12) **FASCICULE DE BREVET EUROPEEN**

(45) Date de publication et mention
de la délivrance du brevet:
**04.10.2001 Bulletin 2001/40**

(51) Int Cl.[7]: **G06F 17/10**, G06F 19/00

(86) Numéro de dépôt international:
**PCT/FR97/00707**

(21) Numéro de dépôt: **97920789.1**

(22) Date de dépôt: **18.04.1997**

(87) Numéro de publication internationale:
**WO 97/41518 (06.11.1997 Gazette 1997/47)**

(54) **PROCEDE DE CODAGE POUR PROCESSEUR DE TRAITEMENT DE SIGNAL, ET PROCESSEUR POUR LA MISE EN OEUVRE D'UN TEL PROCEDE**

KODIERUNGSVERFAHREN FÜR EINEN SIGNALPROZESSOR UND PROZESSOR ZUR DURCHFÜHRUNG EINES DERARTIGEN VERFAHRENS

ENCODING METHOD FOR SIGNAL PROCESSOR AND PROCESSOR FOR IMPLEMENTING SAME

(84) Etats contractants désignés:
**DE GB NL**

(30) Priorité: **26.04.1996 FR 9605325**

(43) Date de publication de la demande:
**10.02.1999 Bulletin 1999/06**

(73) Titulaire: **Thales**
**75008 Paris (FR)**

(72) Inventeur: **DEMEURE, Alain,**
**Thomson-CSF S.C.P.I.**
**F-94117 Arcueil Cedex (FR)**

(74) Mandataire: **Desperrier, Jean-Louis**
**Thomson-CSF Propriété Intellectuelle,**
**Département Protection et Conseil TPI/PC,**
**13, avenue du Prés. Salvador Allende**
**94117 Arcueil Cédex (FR)**

(56) Documents cités:
**WO-A-96/31830**

EP 0 895 621 B1

**Description**

La présente invention se rapporte aux procédés qui permettent de coder les processeurs spécialisés en traitement de signal. Elle concerne également les processeurs de traitement de signal permettant la mise en oeuvre d'un tel procédé.

On sait qu'en dehors des processeurs de type général tels que ceux utilisés par exemple dans les ordinateurs personnels, il existe des processeurs spécialisés, en particulier ceux destinés au traitement des signaux dont la structure est particulièrement adaptée à l'exécution simultanée de plusieurs activités. Les activités sont systématiques et concernent l'accès aux mémoires, les calculs sur les données et la gestion du nombre d'itérations.

A titre d'exemple d'un tel processeur, on citera ceux fabriqués par la Société Analog Device sous les références 21020 ou 21060.

En se reportant à la notice technique d'un tel processeur, on peut constater que le traitement des données est essentiellement fait par répétition de deux types d'actions élémentaires. L'une de ces actions consiste à obtenir successivement un certain nombre d'adresses de la mémoire en utilisant un générateur d'adresse de données (DAG). L'autre de ces actions consiste à effectuer sur les données ainsi sélectionnées un traitement particulier et à itérer ce traitement un nombre déterminé de fois à l'aide d'un compteur de répétition (loop count stack). La génération des adresses et la gestion de la longueur de la boucle sont déterminées par programmation. La programmation de ces deux actions est faite séparément et les relations entre les deux sont déterminées par le programmeur personne physique, qui établit les programmes en prenant en compte mentalement les relations nécessaires. Il n'y a donc aucun aspect automatique et il existe un risque d'erreurs.

L'inventeur a déjà mis au point un procédé de saisie graphique d'application de traitement de signal permettant de formaliser le traitement de signal appliqué à de tels signaux en les présentant sous forme de tableaux d'entrée et de sortie et en établissant des relations systématiques entre ces tableaux.

Ce formalisme mène à la mise au point d'un processeur spécialisé en traitement de signal permettant de le mettre directement en oeuvre. Ce procédé de saisie graphique a fait l'objet d'une demande de brevet français déposée par la de demanderesse le 7 avril 1995 sous le n° 9504175.

Le formalisme en question a également fait l'objet d'une communication au colloque du GRETSI de l'année 1995 à JUAN LES PINS FRANCE et qui correspond au numéro de publication FR 2 732 787.

Enfin, il est prévu de présenter ce formalisme, ainsi que des outils de programmation, sur le réseau Internet à partir du serveur de l'Université de Berkeley à l'adresse: http://ptolemy.eecs.berkeley.edu.

Ce formalisme, qui peut être également considéré comme un langage, est connu dans l'art sous le nom de ARRAY-OL.

Dans le cadre de ces études, les inventeurs ont également inventé un procédé de codage permettant d'unifier les deux actions répétitives décrites plus haut, de manière à avoir automatiquement le résultat souhaité sans être obligé de relier mentalement les deux opérations au niveau de la programmation.

Pour cela l'invention, propose un procédé de codage et un processeur pour la mise en oeuvre de ce procédé, selon les revendications annexées.

D'autres particularités et avantages de l'invention apparaîtront clairement dans la description suivante, présentée à titre d'exemple non limitatif en regard des figures annexées qui représentent :

- la figure 1, un graphique élémentaire permettant de définir les notions et le vocabulaire utilisés dans la description de l'invention ;
- la figure 2, un exemple d'un tableau de résultats;
- la figure 3, le tableau "quotient" obtenu par division du tableau de la figure 2 par le motif;
- la figure 4, une représentation du tableau de la figure 2 dans un espace cartésien à 4 dimensions;
- la figure 5, un exemple d'implémentation des opérations permettant de passer du tableau de la figure 4 à celui de la figure 2;
- la figure 6, une simplification des étages multiplieurs de la figure 5;
- la figure 7, un exemple de transformation élémentaire TE montrant que les motifs d'entrée et de sortie sont générés différemment;
- la figure 8, une représentation dans un espace cartésien à 4 dimension d'un tableau d'entrées;
- la figure 9, un tableau d'entrées simplifié avec les trois premiers motifs issus du pavage ; et
- la figure 10, un exemple d'implémentation complet des opérations d'entrée et de sortie.

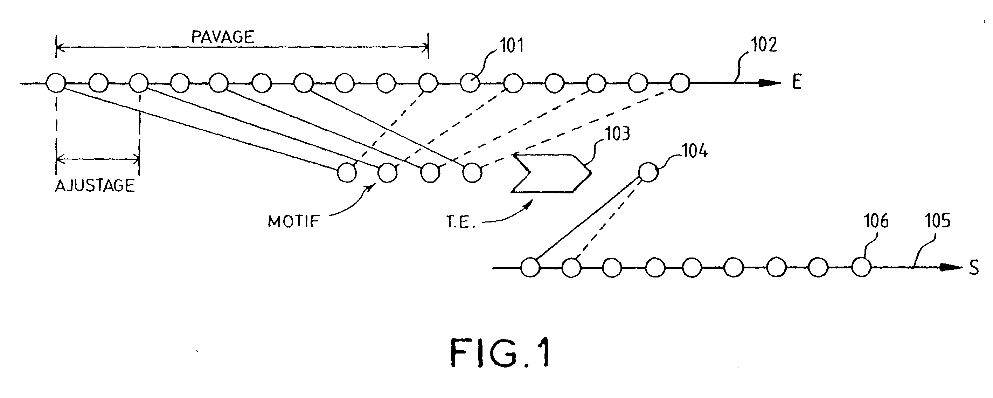

Sur la figure 1, on a représenté un ensemble de données 101 placées de manière équidistantes sur un axe 102 et correspondant à une entrée E. Ces données sont par exemple des échantillons successifs dans le temps provenant d'un hydrophone unique.

Le traitement de ces données se fait par itérations successives, correspondant chacune par exemple à une incrémentation sur le temps.

A chaque itération, on sélectionne un groupe de données, qui est définie par une relation dite "d'ajustage". Dans cet exemple la relation d'ajustage consiste à sélectionner une donnée sur deux.

Le groupe de données ainsi sélectionné, quatre dans cet exemple, forme donc un "motif" lequel est soumis à une transformation élémentaire TE symbolisée par une grosse pointe de flèche 103. Dans cet exemple, cette transformation élémentaire peut être par exemple une addition pondérée qui donne un résultat unique 104.

A l'incrément suivant, le groupe de données formant le motif suivant est sélectionné à partir d'un déplacement du groupe précédent d'une distance dite "pavage", qui est ici de 9 pas. Bien entendu l'ajustage permettant d'obtenir ce motif est le même que le précédent. L'ajustage correspondant à la première opération est représenté par des traits pleins entre les données sélectionnées la première fois. L'ajustage correspondant aux données sélectionnées à l'incrément suivant avec la relation de pavage est représenté par des traits pointillés.

Les résultats 104 sont ensuite regroupés dans cet exemple sur un axe 105 pour former les informations de sortie S. Le placement de ces résultats 104 sur l'axe 105 pour former la succession des données de sortie 106 se fait uniquement à l'aide d'une relation de pavage car ici le motif de sortie est ponctuel. Dans cet exemple, pour la simplicité de l'explication ce n'est qu'une simple mise à la suite les uns des autres des résultats 104, puisque ceux-ci forment une donnée unique.

Là aussi le trait qui relie le résultat 104 à la donnée de sortie 106 est plein pour la première opération et en pointillé pour la deuxième.

L'itération se poursuit ensuite en utilisant toujours la relation de pavage.

Ces définitions se généralisent dans le cas où les données, de manière plus générale les entrées, proviennent de plusieurs sources et doivent alors de préférence pour la compréhension et l'agencement des traitements être placées dans des représentations faisant apparaître plusieurs dimensions ou plusieurs sources. En se plaçant dans la suite de l'exemple précédent, les échantillons successifs dans le temps provenant d'un ensemble d'hydrophones alignés formant par exemple une antenne sonar seront placés dans un tableau rectangulaire. Pour traiter ces signaux on les regroupera à l'aide d'un motif soumis à des relations d'ajustage et de pavage. Après application d'une TE aux motifs successifs, les résultats de ces traitements seront replacés dans un tableau de résultats.

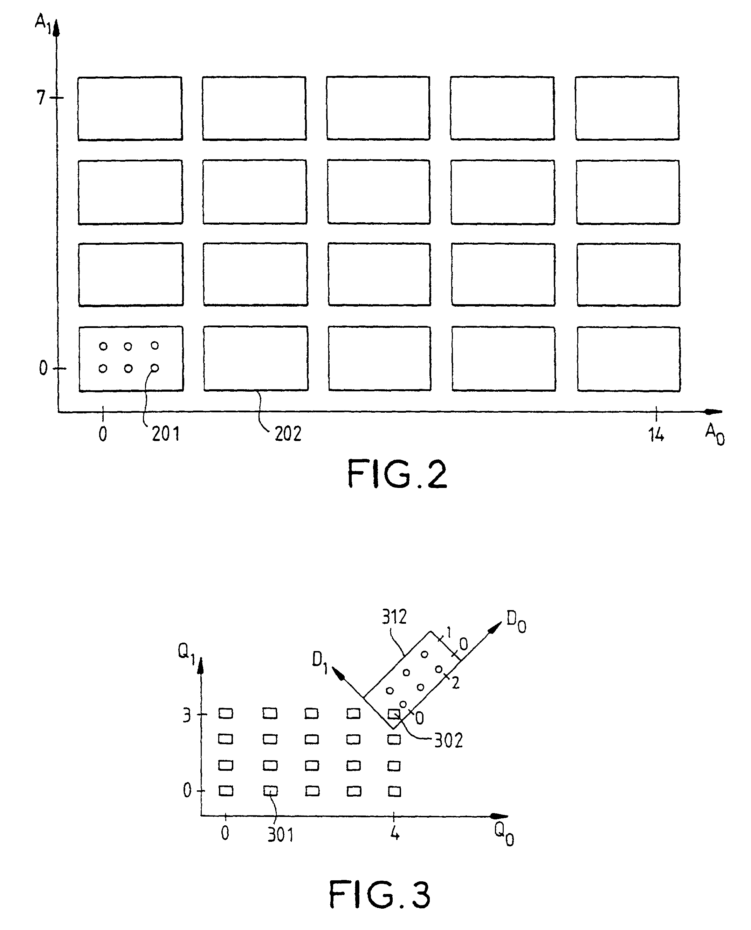

On a représenté sur la figure 2, un tel tableau de résultats dans lequel les sorties 201 sont réparties selon une disposition en coordonnées cartésiennes selon deux axes A0 et A1. La description part du tableau de résultats pour montrer que l'invention permet à partir d'une transformation simple sur ce tableau d'obtenir une matrice qui permet d'unifier les opérations citées plus haut. On montrera ensuite que l'on peut par la même transformation, avec la connaissance des deux motifs en entrée et en sortie de la transformation TE, unifier ces mêmes opérations sur le tableau de données d'entrée. Toutefois le motif de résultats peut être unidimensionnel.

En effet, alors que dans un tableau d'entrées on n'a aucune raison dans le cas général pour que les motifs successifs sélectionnés dans ce tableau par le pavage pour être présentés à l'opération TE soient joints pour former un pavage continu, c'est le contraire dans un tableau de résultats où tous les résultats doivent être calculés, et ceci une seule fois. Ils ne présentent donc à priori aucune redondance, ni ne nécessitent aucune disjonction.

Le tableau de la figure 2 est dans cet exemple formé de 15 colonnes de 8 résultats regroupés en 20 motifs 202 identiques contigus comprenant chacun 3 colonnes de 2 résultats. Pour simplifier la figure, on n'a représenté les ronds 201 figurant ces résultats que dans l'un des motifs.

Les motifs étant donc identiques, on peut alors simplifier le tableau en le limitant à un point par motif, étant entendu que ce point représente les six résultats du motif concerné. On obtient alors le tableau de la figure 3, comportant 5 colonnes et 4 rangées de points représentés par de petits carrés 301. Comme ce tableau est le résultat de la division de celui de la figure 2 par le motif, on l'a appelé tableau quotient, avec des dimensions 0/3 et 0/4 sur des axes Q1 et Q0. Pour bien rappeler qu'un point correspond à un motif, on a représenté en superposition en biais le motif 312 associé au point extrême 302. On appelle alors ce motif le tableau diviseur du tableau résultat, avec des dimensions 0/1 et 0/2 sur des axes D0 et D1.

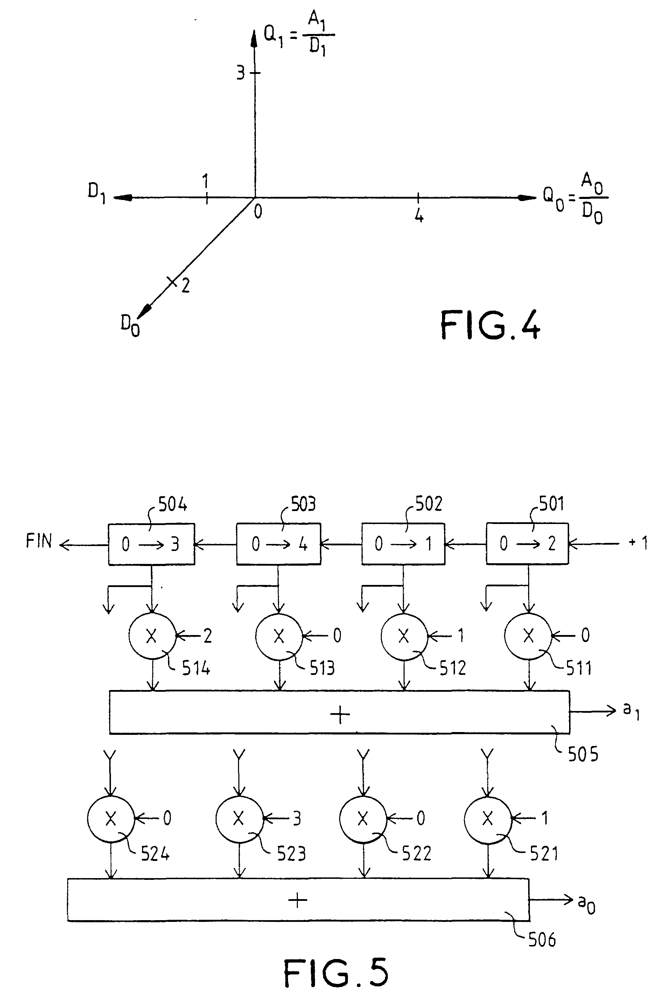

Une dernière simplification consiste alors à représenter le tableau résultat sous la forme d'un parallélépipède dans un espace Cartésien à quatre dimensions comme sur la figure 4. Cet espace comporte quatre axes:

- deux axes Q1 = A1/D1 et Q0 = A0/D0;
- deux axes D1 et D0;

et le parallélépipède a donc 4 dimensions de tailles respectives 4,5,2 et 3.

Tout résultat du tableau correspond donc à un point de coordonnées entières de ce parallélépipède, qui peut être représenté par un vecteur $\{r\} = \{q1, q0, d1, d0\}$.

De même, ce résultat dans le tableau A1/A0 est un vecteur à deux dimensions $\{R\} = \{a1, a0\}$.

La correspondance entre ces deux vecteurs peut être obtenue par une matrice de projection telle que : $\{R\} = \{MP\} \times \{r\}$

Dans cet exemple, la matrice en question, où les deux premières colonnes correspondent à la relation de pavage, et les deux dernières à la relation d'ajustage, est donnée par:

$$\begin{vmatrix} 2010 \\ 0301 \end{vmatrix}$$

L'intérêt de cette représentation est que l'on peut en déduire une implémentation matérielle qui permet justement d'obtenir l'unification des deux actions annoncée plus haut.

Dans un exemple de réalisation d'une telle implémentation, représenté sur la figure 5, on dispose d'un compteur formé de quatre étages 501 à 504. Ces étages peuvent prendre respectivement 3, 2, 5 et 4 états.

Une horloge à l'entrée de l'étage 501 incrémente celui-ci, et lorsqu'il revient à zéro il incrémente l'étage 502, et ainsi de suite jusqu'à ce que l'étage 504 revienne à zéro, ce qui délivre un signal de fin d'opération.

L'état de l'ensemble des étages du compteur donne donc pour chaque coup d'horloge la valeur de l'un des vecteurs {r} contenus dans le parallélépipède de l'espace de la figure 4.

Donc à la fin des opérations on a parcouru l'ensemble du tableau des résultats, exprimé sous la forme Q/D de la figure 4.

Pour obtenir ces résultats sous la forme du tableau de la figure 2, qui permet une exploitation "naturelle" de ces résultats, il faut multiplier le vecteur ainsi obtenu par la matrice {MP}.

Pour cela on multiplie à chaque coup d'horloge le contenu des étages du compteur par les valeurs des coefficients de la matrice.

On utilise pour cela quatre multiplieurs 511 à 514 dans lesquels on introduit les coefficients 0, 1, 0 et 2, et quatre multiplieurs 521 à 524 dans lesquels on introduit les coefficients 1, 0, 3 et 0. Bien entendu la valeur 0 permet de se passer de multiplieur, mais celui-ci peut être utilisé pour d'autres versions du circuit, programmées différemment.

En additionnant alors les résultats des multiplications dans des sommateurs 505 (pour 511 à 514) et 506 (pour 521 à 524), on obtient les coefficients a1 et a0 du vecteur {R} qui donne la position du résultat dans le tableau résultat de la figure 2.

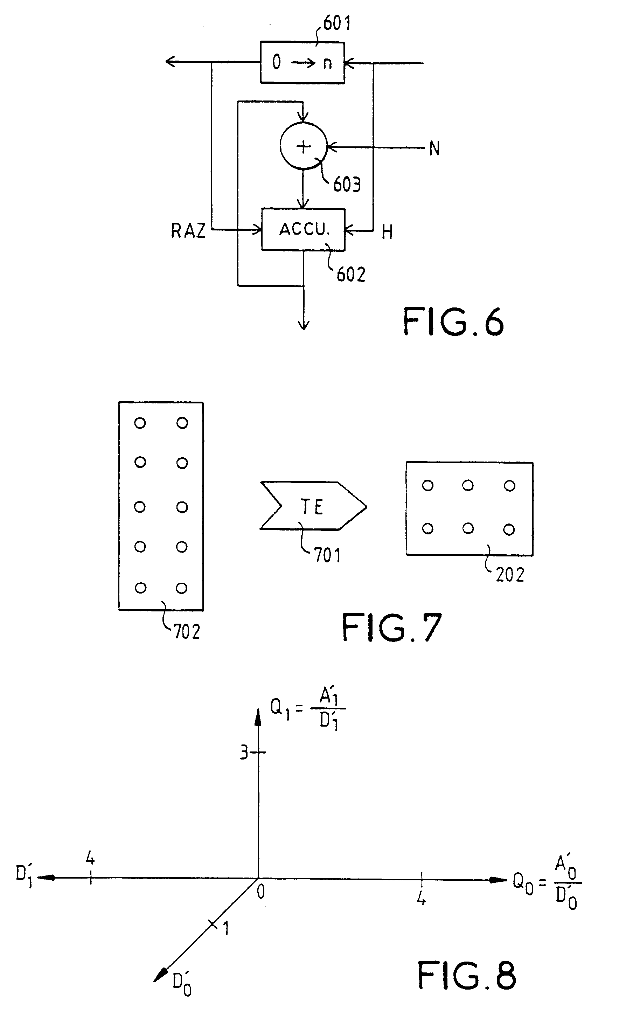

Les multiplieurs étant des organes coûteux, une solution moins onéreuse, représentée sur la figure 6, consiste pour chaque étage tel que 601 à relier son entrée à l'entrée d'horloge H d'un accumulateur 602 dont la sortie est bouclée sur sa propre entrée par l'intermédiaire d'un additionneur 603 lequel reçoit par ailleurs la valeur du coefficient multiplicateur N. Cette sortie est par ailleurs appliquée au sommateur correspondant.

La sortie de l'étage 601 est appliquée à l'entrée de remise à zéro de l'accumulateur, et lorsque cet étage revient à zéro il en est de même pour l'accumulateur.

Le même raisonnement permet de représenter le tableau d'entrées selon un espace cartésien à quatre dimensions. Cet espace sera différent de celui décrit plus haut puisque l'opération TE fait en général correspondre des motifs d'entrées et de résultats de dimensions différentes. Par exemple, comme représenté sur la figure 7, le motif 202 de la figure 2 est obtenu par une opération TE 701, de filtrage par exemple, sur un motif 702 comprenant 2 colonnes et 5 lignes.

Toutefois, comme la TE délivre un seul motif de résultats à partir d'un seul motif d'entrées, il est clair que dans l'espace cartésien des entrées, les axes Q1 et Q0 seront les mêmes. Les deux autres axes, correspondant au motif diviseur, seront différents et on les appellera D'1 et D'0.

Le parallélépipède représentant dans cet espace cartésien le tableau d'entrée aura donc, compte tenu de la taille du motif, des dimensions 3, 4, 4 et 1, comme représenté sur la figure 8. Les axes Q1 et Q0 seront alors définis par les relations :

$$- Q1 = A'1/D'1 \text{ et } Q0 = A'0/D'0$$

dans lesquelles les axes A'1 et A'0 sont cette fois les axes du tableau d'entrée.

Toute entrée du tableau correspond donc à un point de coordonnées entières de ce parallélépipède, qui peut être représenté par un vecteur {e} = {q1, q0, d'1, d'0}.

De même, cette entrée dans le tableau "naturel" A'1/A'0 est un vecteur à deux dimensions {E} = {a'1, a'0}.

Là aussi la correspondance entre ces deux vecteurs peut être obtenue par une autre matrice de projection telle que : {E} = {MP'} x {e}

Cette matrice est bien entendu à définir en fonction des relations d'ajustage et de pavage appliquées au tableau A'1/A'0. On a vu que ces relations pouvaient être beaucoup plus complexes que dans le tableau A1/A0.

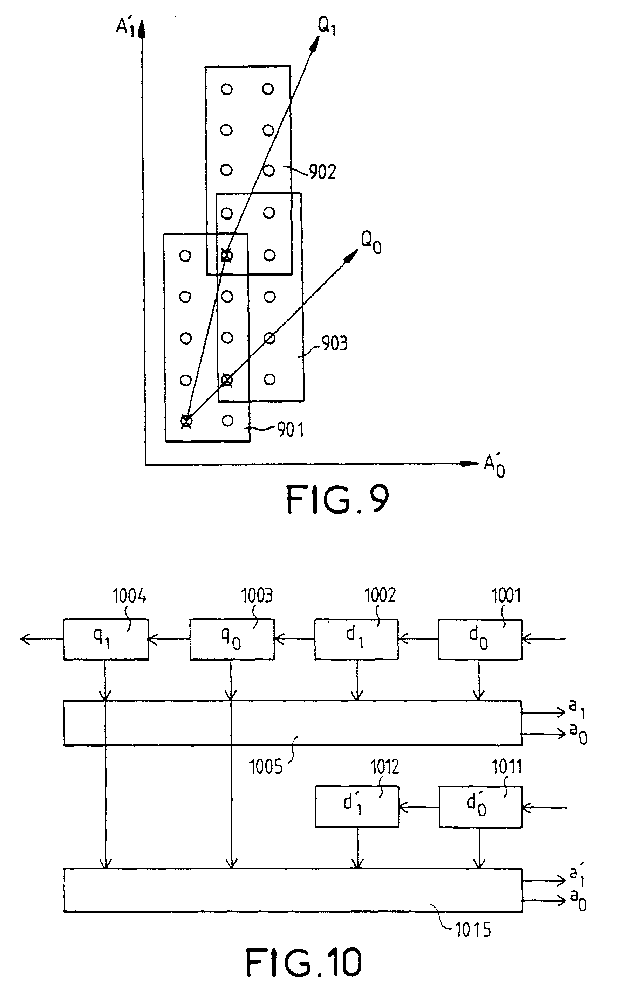

A titre d'exemple, on a représenté sur la figure 9 de manière partielle un tableau d'entrées comportant un motif de base 901 et les deux premiers motifs suivants pris sur les axes Q1 et Q0. Les entrées définissant les extrémités des vecteurs unitaires sur les axes Q1 et Q0 ont été notées par des croix. On peut constater que tous les éléments ainsi représentés suffisent à définir la transformation, et donc la matrice, permettant de passer de {E} à {e}

Dans cet exemple, la matrice en question, où les deux premières colonnes correspondent à la relation de pavage, et les deux dernières à la relation d'ajustage, est donnée par:

$$\begin{vmatrix} 4 & 1 & 1 & 0 \\ 1 & 1 & 0 & 1 \end{vmatrix}$$

On constate qu'en raison du décalage en biais des motifs dans la relation de pavage, et corrélativement des axes Q1 et Q0, il n'y a pas de zéro dans les deux premières colonnes de la matrice.

On peut donc de la même manière que pour le tableau des résultats obtenir une implémentation matérielle qui permet là aussi d'unifier les deux actions comme annoncé plus haut. En outre cette implémentation peut contenir une partie commune avec celle utilisée pour le tableau des résultats puisque le calcul des coefficients q1 et q0 est le même.

On obtient alors le schéma représenté de manière très simplifiée sur la figure 10, où les rectangles 1001 à 1004 permettent d'obtenir d0, d1, q0 et q1 et alimentent le rectangle 1005 pour obtenir a1 et a0.

Il suffit alors de rajouter les organes 1011 et 1012 pour obtenir d'0 et d'1 et alimenter l'organe 1015, lequel étant également alimenté par les organes 1003 et 1004 délivre a'1 et a'0.

On constate donc que cet ensemble unique et fonctionnant de manière autonome permet d'obtenir les boucles de lecture (1011, 1012), d'écriture (1001-1002), les boucles d'itération de la TE (1003, 1004) et l'ensemble des organes 1001 à 1004 et 1011 et 1012 pourront être vus comme un compteur de répétitions.

Ces schémas ne sont que des schémas de principe et dans une réalisation concrète l'homme de l'art utiliserait par exemple une mémoire RAM, des registres, des additionneurs et des comparateurs, ce qui permettrait d'étendre l'invention à un nombre quelconque de dimensions et à une taille quelconque dans chaque dimension.

## Revendications

1. Procédé de codage pour processeur de traitement de signal, dans lequel on part d'un tableau d'entrée que l'on échantillone en effectuant une sélection dite ajustage d'entrée d'un groupe de données dit émotif d'entrée (901) et en déplaçant à chaque incrément ce motif d'entrée d'une distance dite pavage d'entrée, on fait subir à chacun de ces motifs d'entrée une transformation élémentaire dite TE qui délivre des groupes de données dits motifs de sortie (202), et on constitue un tableau de sortie (201) en assemblant ces motifs de sortie en les plaçant dans ce tableau de sortie de manière à former selon l'un des axes de ce tableau une succession de ces motifs de sortie dite pavage de sortie cf selon l'autre axe une succession dite ajustage de sortie, chacune des données dans ce tableau de sortie pouvant être représentée par un vecteur R, **caractérisé en ce que** l'on détermine un premier espace multidimensionnel de sortie comportant un premier ensemble d'axes (Q1, Q0) correspondant aux axes d'un tableau dit quotient formé en réduisant dans le tableau de sortie les motifs de sortie à des points, cette opération étant assimilée à une division du tableau de sortie par ce motif de sortie qui est alors dit tableau diviseur de sortie, ce premier espace comprenant ainsi toutes les sorties du tableau de sortie rangées de manière à pouvoir être parcourues successivement par une incrémentation de l'horloge du processeur, chacune de ces sorties correspondant à un point de coordonnées entières du premier espace, qui peut être représenté par un vecteur R, et **en ce que** l'on détermine une première matrice de projection MP par la relation R = MP x r permettant de passer de ce premier espace au tableau de sortie, ce qui permet en parcourant successivement toutes les positions du premier espace d'obtenir tous les vecteurs r et en multipliant ce vecteur r par la matrice de projection MP de placer les sorties dans le tableau de sortie.

2. Procédé selon la revendication 1, dans lequel on détermine un deuxième espace multidimensionnel d'entrée comportant un troisième ensemble d'axes (Q1,Q0) correspondant aux axes du tableau quotient du tableau d'entrée par le motif d'entrée considéré lui-même comme un tableau diviseur d'entrée, les axes de ce troisième ensemble étant identiques à ceux du premier, et un quatrième ensemble d'axes (D1,D0) correspondant aux axes de ce tableau diviseur d'entrée, ce deuxième espace comprenant ainsi toutes les entrée du tableau d'entrée rangées de manière à pouvoir être parcourues successivement par une incrémentation de l'horloge du processeur, et en ce que l'on détermine une deuxième matrice de projection MP' du tableau d'entrée à ce deuxième espace, ce qui permet de déterminer automatiquement en outre un deuxième codage permettant de sélectionner les entrées dans le tableau d'entrée et ou cette entrée dans ce tableau diviseur d'entrée est représenté par un vecteur E qui correspond à un vecteur e de coordonnés entières par une relation E = MP' x e.

3. Processeur pour la mise en oeuvre du procédé selon l'une quelconque des revendications 1 et 2, **caractérisé en ce qu'**il comprend un premier compteur formé d'un ensemble d'étages (501-504) et, une horloge pour incrémenter ce compteur, le nombre d'étages étant égal au nombre d'axes dans le premier et le deuxième ensemble d'axes, le nombre d'états que chaque étage peut prendre étant égal à la dimension du premier espace sur l'axe correspondant à cet étage, et en ce ledit processeur comprend un premier (511-514) et un deuxième (521-524) ensembles de multiplieurs destinés à multiplier les sorties desdits étages par les coefficients de ladite première matrice MP, et un premier et un deuxième sommateurs (505,506) pour additionner respectivement les sorties des premier et deuxième ensembles de multiplieurs et pour délivrer les coefficients du vecteur R qui permet de placer les sorties dans le tableau de sortie.

4. Processeur selon la revendication 3, **caractérisé en ce qu'**il comprend en outre, un deuxième compteur formé d'un ensemble d'étages (1001, 1004) qui est incrémenté par ladite horloge, le nombres d'étages étant égal au nombre d'axes dans le quatrième ensemble d'axes, le nombre d'états que chaque étage peut prendre étant égal à la dimension du deuxième espace sur l'axe correspondant à cet étage, et en ce ledit processeur comprend un troisième et un quatrième ensembles de multiplieurs pour multiplier les sorties des étages de ce deuxième compteur et les sorties des étages dudit premier compteur correspondant aux axes communs au premier et au deuxième espaces par les coefficients de ladite deuxième matrice MP', et **en ce qu'**il comprend un troisième et un quatrième sommateurs (1015) pour additionner respectivement les sorties des troisième et quatrième ensembles de multiplieurs et pour délivrer les coefficients du vecteur E qui permet de sélectionner les entrées dans le tableau d'entrée.

5. Processeur selon la revendication 3, **caractérisé en ce que** chaque multiplieur comprend un accumulateur (602) fonctionnant au rythme des signaux de l'horloge, des moyens pour boucler cette sortie sur cette entrée par un additionneur (603) recevant la valeur du coefficient multiplicateur nécessaire, des moyens pour remiser cette entrée à zéro qui sont reliés à la sortie de l'étage correspondant (601).

**Patentansprüche**

1. Codierungsverfahren für Signalverarbeitungsprozessor, bei dem von einer Eingangstabelle ausgegangen wird, die abgetastet wird, indem eine Eingangseinstellung genannte Auswahl einer Eingangsmuster (901) genannten Datengruppe vorgenommen wird und indem dieses Eingangsmuster bei jeder Inkrementierung um eine Eingangspflaster genannte Strecke verschoben wird, jedes dieser Eingangsmuster einer TE genannten Elementartransformation unterworfen wird, die Ausgangsmuster (202) genannte Datengruppen ergibt, und eine Ausgangstabelle gebildet wird, indem diese Ausgangsmuster zusammengefügt werden, indem sie in dieser Ausgangstabelle in der Weise angeordnet werden, daß längs einer der Achsen dieser Tabelle eine Ausgangspflaster genannte Folge dieser Ausgangsmuster gebildet wird und längs der anderen Achse eine Ausgangseinstellung genannte Folge gebildet wird, wobei alle Daten in dieser Ausgangstabelle durch einen Vektor R dargestellt werden können, **dadurch gekennzeichnet, daß** ein erster mehrdimensionaler Ausgangsraum bestimmt wird, der eine erste Gruppe von Achsen (Q1, Q0) enthält, die den Achsen einer Quotient genannten Tabelle entsprechen, die gebildet wird, indem in der Ausgangstabelle die Ausgangsmuster auf Punkte reduziert werden, wobei diese Operation zu einer Division der Ausgangstabelle durch dieses Ausgangsmuster äquivalent ist, welche dann Ausgangsdivisortabelle genannt wird, wobei dieser erste Raum somit alle Ausgänge der Ausgangstabelle enthält, die in der Weise angeordnet sind, **daß** sie nacheinander durch eine Inkrementierung des Prozessortakts durchlaufen werden können, wobei jeder dieser Ausgänge einem ganzzahligen Koordinatenpunkt des ersten Raums entspricht, der durch einen Vektor R dargestellt werden kann, und **daß** eine erste Projektionsmatrix MP durch die Beziehung $R = MP \times r$ bestimmt wird, die den Übergang von diesem ersten Raum zur Ausgangstabelle ermöglicht, was ermöglicht, durch aufeinanderfolgendes Durchlaufen aller Positionen des ersten Raums alle Vektoren r zu erhalten, und durch Multiplizieren dieses Vektors r mit der Projektionsmatrix MP die Ausgänge in der Ausgangstabelle anzuordnen.

2. Verfahren nach Anspruch 1, bei dem ein zweiter mehrdimensionaler Eingangsraum bestimmt wird, der eine dritte Gruppe von Achsen (Q1, Q0), die den Achsen der Quotiententabelle der Eingangstabelle durch das Eingangsmuster, das selbst als Eingangsdivisortabelle angesehen wird, entsprechen, wobei die Achsen dieser dritten Gruppe mit jenen der ersten übereinstimmen, sowie eine vierte Gruppe von Achsen (D1, D0), die den Achsen dieser Eingangsdivisortabelle entsprechen, enthält, wobei dieser zweite Raum somit alle Eingänge der Eingangstabelle enthält, die in der Weise angeordnet sind, daß sie nacheinander durch eine Inkrementierung des Prozessortakts durchlaufen werden können, und daß eine zweite Projektionsmatrix MP' der Eingangstabelle auf diesen zweiten Raum bestimmt wird, was ermöglicht, automatisch außerdem eine zweite Codierung zu bestimmen, die ermöglicht, die Eingänge in der Eingangstabelle auszuwählen, wobei dieser Eingang in dieser Eingangsdivisortabelle durch einen Vektor E dargestellt wird, der über eine Beziehung $E = MP' \times e$ einem Vektor e von ganzzahligen Koordinaten entspricht.

3. Prozessor für die Ausführung des Verfahrens nach einem der Ansprüche 1 und 2, **dadurch gekennzeichnet, daß** er einen ersten Zähler, der aus einer Gruppe von Stufen (501-504) gebildet ist, und einen Taktgeber für die Inkrementierung dieses Zählers umfaßt, wobei die Anzahl der Stufen gleich der Anzahl der Achsen in der ersten und in der zweiten Gruppe von Achsen ist, wobei die Anzahl der Zustände, die jede Stufe annehmen kann, gleich der Dimension des ersten Raums auf der dieser Stufe entsprechenden Achse ist, und **daß** der Prozessor eine erste Gruppe (511-514) und eine zweite Gruppe (521-524) von Multiplizierern, die dazu bestimmt sind, die Ausgänge dieser Stufen mit den Koeffizienten der ersten Matrix MP zu multiplizieren, und einen ersten und einen zweiten Summierer (505, 506) zum Addieren der Ausgänge der ersten bzw. zweiten Gruppe von Multiplizierern und zum Liefern der Koeffizienten des Vektors R, der die Anordnung der Ausgänge in der Ausgangstabelle ermöglicht, umfaßt.

4. Prozessor nach Anspruch 3, **dadurch gekennzeichnet, daß** er außerdem einen zweiten Zähler umfaßt, der aus einer Gruppe von Stufen (1001, 1004) gebildet ist, die durch den Taktgeber inkrementiert wird, wobei die jeweilige Anzahl der Stufen gleich der Anzahl von Achsen in der vierten Achsengruppe ist, wobei die Anzahl der Zustände, die jede Stufe annehmen kann, gleich der Dimension des zweiten Raums auf der dieser Stufe entsprechenden Achse ist, und **daß** der Prozessor eine dritte und eine vierte Gruppe von Multiplizierern umfaßt zum Multiplizieren der Ausgänge der Stufen dieses zweiten Zählers und der Ausgänge der Stufen des ersten Zählers, die den Achsen entsprechen, die den ersten und zweiten Räumen gemeinsam sind, mit den Koeffizienten der zweiten Matrix MP', und **daß** er einen dritten und einen vierten Summierer (1015) zum Addieren der Ausgänge der dritten bzw. der vierten Gruppe von Multiplizierern und zum Liefern der Koeffizienten des Vektors E, der die Auswahl der Eingänge in der Eingangstabelle ermöglicht, umfaßt.

5. Prozessor nach Anspruch 3, **dadurch gekennzeichnet, daß** jeder Multiplizierer einen Akkumulator (602), der im Takt der Taktgebersignale arbeitet, Mittel zum Zurückschleifen dieses Ausgangs auf diesen Eingang durch einen Addierer (603), der den Wert des erforderlichen Multiplikatorkoeffizienten empfängt, und Mittel zum Rücksetzen dieses Eingangs auf null, die mit dem Ausgang der entsprechenden Stufe (601) verbunden sind, umfaßt.

**Claims**

1. Coding process for a signal processor, which starts from an input array which is sampled by performing a so-called input fitting selection of a so-called input pattern data group (901) and by displacing this input pattern at each increment by a so-called input paving distance, each of these input patterns is subjected to a so-called TE elementary transformation which delivers so-called output pattern data groups (202), and an output array (201) is constructed by assembling these output patterns by placing them in this output array in such a way as to form according to one of the axes of this array a succession of the so-called output paving output patterns and along the other axis a so-called output fitting succession, each of the data in this output array being able to be represented by a vector R, **characterized in that** a first multidimensional output space is determined, comprising a first set of axes (Q1, Q0) corresponding to the axes of a so-called quotient array formed by reducing in the output array the output patterns to points, this operation being regarded as a dividing of the output array by this output pattern which is then referred to as the output devisor array, this first space thus comprising all the outputs of the output array arranged in such a way as to be able to traversed successively by an incrementation of the clock of the processor, each of these outputs corresponding to a point with integer coordinates of the first space, which can be represented by a vector R, and **in that** a first projection matrix MP is determined through the relation R = MP x r making it possible to switch from this first space to the output array, thereby making it possible by successively traversing all the positions of the first space to obtain all the vectors r and by multiplying this vector r by the projection matrix MP to place the outputs in the output array.

2. Process according to Claim 1, in which a second input multidimensional space is determined, comprising a third set of axes (Q1, Q0) corresponding to the axes of the quotient array resulting from dividing the input array by the input pattern itself regarded as an input divisor array, the axes of this third set being identical to those of the first, and a fourth set of axes (D1, D0) corresponding to the axes of this input divisor array, this second space thus comprising all the inputs of the input array arranged in such a way as to be able to be traversed successively by an incrementation of the clock of the processor, and in that a second projection matrix MP' from the input array to this second space is determined, this making it possible moreover automatically to determine a second coding for selecting the inputs in the input array and in which this input in this input divisor array is represented by a vector E which corresponds to a vector e with integer coordinates through a relation E = MP' × e.

3. Processor for implementing the process according to either one of Claims 1 and 2, **characterized in that** it comprises a first counter formed by a set of stages (501-504) and a clock for incrementing this counter, the number of stages being equal to the number of axes in the first and the second set of axes, the number of states which each stage can take being equal to the dimension of the first space on the axis corresponding to this stage, and **in that** the said processor comprises a first (511-514) and a second (521-524) set of multipliers intended to multiply the outputs of the said stages by the coefficients of the said first matrix MP, and a first and a second summator (505, 506) for respectively adding up the outputs of the first and second sets of multipliers for delivering the coefficients of the vector R which makes it possible to place the outputs in the output array.

4.  Processor according to Claim 3, **characterized in that** it furthermore comprises a second counter formed by a set of stages (1001, 1004) which is incremented by the said clock, the number of stages being equal to the number of axes in the fourth set of axes, the number of states which each stage can take being equal to the dimension of the second space on the axis corresponding to this stage, and **in that** the said processor comprises a third and a fourth set of multipliers for multiplying the outputs of the stages of this second counter and the outputs of the stages of the said first counter corresponding to the axes common to the first and to the second spaces by the coefficients of the said second matrix MP', and **in that** it comprises a third and a fourth summator (1015) for respectively adding up the outputs of the third and fourth sets of multipliers and for delivering the coefficients of the vector E which makes it possible to select the inputs in the input array.

5.  Process according to Claim 3, **characterized in that** each multiplier comprises an accumulator (602) operating at the rate of the signals of the clock, means for looping this output back to this input via an adder (603) receiving the value of the necessary multiplier coefficient, means for resetting this input to zero which are linked to the output of the corresponding stage (601).

FIG.1

EP 0 895 621 B1

FIG.2

FIG.3

FIG.4

FIG.5

FIG.6

FIG.7

FIG.8

FIG.9

FIG.10